# EUROPEAN PATENT APPLICATION

(11) **EP 4 790 300 A1**
(43) Date of publication of application: **12.08.2026**
(21) Application number: 23954811.8
(22) Date of filing: 06.10.2023
(51) Int. Cl.: F16L 37/40

(54) **COUPLER AND HYDRAULIC EQUIPMENT USING COUPLER**

(71) Applicant: Astemo, Ltd., Chiyoda-ku, Tokyo 1000004 (JP)
(72) Inventor: KUROIWA, Naoya, Hitachinaka-shi, Ibaraki 312-8503 (JP); FUJIKAWA, Yosuke, Hitachinaka-shi, Ibaraki 312-8503 (JP); YAMANO, Hinako, Hitachinaka-shi, Ibaraki 312-8503 (JP); MURAKAMI, Yosuke, Hitachinaka-shi, Ibaraki 312-8503 (JP); FUJITA, Masataka, Hitachinaka-shi, Ibaraki 312-8503 (JP)
(74) Representative: Nordmeyer, Philipp Werner
(86) International application number: PCT/JP2023/036504
(87) International publication number: WO 2025/074602

(57) **Abstract**

A coupler (11) includes a back side seal member (91) provided on a back side in an insertion direction relative to an opening (28) of a first oil passage (31) and an opening (43) of a second oil passage (32), and a front side seal member (92) provided on a front side in the insertion direction relative to the opening (28) of the first oil passage (31) and the opening (43) of the second oil passage (32). In a connection state in which a first member (20) and a second member (40) are connected to each other, a seal diameter (L1) of the front side seal member (92) is set to be equal to or smaller than a seal diameter (L2) of the back side seal member (91).

## Description

### TECHNICAL FIELD

The present invention relates to an improved coupler and a hydraulic equipment using the coupler.

### BACKGROUND ART

Pipes through which a fluid such as hydraulic oil flows can be connected by a coupler. A conventional technique regarding a coupler is disclosed in Patent Literature 1.

The coupler disclosed in Patent Literature 1 includes a plug (first member) having an insertion portion in which a first oil passage is formed, and a socket (second member) which has an inserted portion, into which the insertion portion is inserted, and in which a second oil passage capable of communicating with the first oil passage is formed in the inserted portion.

In a separated state in which connection between the plug and the socket is released, a first valve body provided in the first oil passage of the plug is seated on a first valve seat, and the first oil passage is closed. Similarly, in the separated state, a second valve body provided in the second oil passage of the socket is seated on a second valve seat, and the second oil passage is closed.

In a connection state in which the plug and the socket are connected to each other, the first valve body and the second valve body push each other, the first valve body separates from the first valve seat, and the first oil passage is opened. Similarly, in the connection state, the second valve body is separated from the second valve seat, and the first oil passage is opened.

### PRIOR ART DOCUMENT

### PATENT LITERATURE

Patent Literature 1: JP4121018B

### SUMMARY OF INVENTION

### OBJECT TO BE ACHIEVED BY THE INVENTION

In the connection state, an internal pressure of hydraulic oil applies a force to the socket and the plug in a direction in which the socket and the plug are separated from each other. Therefore, the socket and the plug are required to have such a connection strength that the connection is not released by the internal pressure. Further, when the connection is released, the hydraulic oil may scatter from the first oil passage and the second oil passage, and thus there is room for improvement.

An object of the present invention is to provide a coupler capable of reducing a force acting in a direction of releasing connection by an internal pressure of hydraulic oil.

### MEANS FOR ACHIEVING THE OBJECT

According to the present disclosure, there is provided a coupler including:
a first member including an insertion portion in which a first oil passage is formed, an opening of the first oil passage being formed in an outer peripheral surface of the insertion portion;
a first valve mechanism including a first valve body capable of opening and closing the first oil passage;
a second member including an inserted portion into which the insertion portion is insertable, an opening of a second oil passage capable of communicating with the first oil passage being formed in an inner peripheral surface of the inserted portion;
a back side seal member provided on a back side in an insertion direction relative to the opening of the first oil passage and the opening of the second oil passage and closing a gap between the outer peripheral surface of the insertion portion and the inner peripheral surface of the inserted portion; and
a front side seal member provided on a front side in the insertion direction relative to the opening of the first oil passage and the opening of the second oil passage and closing a gap between the outer peripheral surface of the insertion portion and the inner peripheral surface of the inserted portion, in which
in a connection state in which the insertion portion is inserted into the inserted portion and the first member and the second member are connected to each other,
a seal diameter of the front side seal member is set to be equal to or smaller than a seal diameter of the back side seal member.

### EFFECTS OF INVENTION

According to the present disclosure, it is possible to provide a coupler capable of reducing a force acting in a direction of releasing connection by an internal pressure of hydraulic oil.

### BRIEF DESCRIPTION OF DRAWINGS

[Fig. 1] Fig. 1 is a diagram illustrating a hydraulic shock absorber including a coupler according to Embodiment 1.
[Fig. 2] Fig. 2 is a cross-sectional view of the coupler in a separated state in which a first member and a second member are separated from each other.
[Fig. 3] Fig. 3 is a cross-sectional view of the coupler in a connection state in which the first member and the second member are connected to each other.
[Fig. 4] Fig. 4 is a cross-sectional view of the coupler in a state in which a pushing member is separated from a first valve body and a first oil passage is closed after the first member and the second member are connected to each other.
[Fig. 5] Fig. 5A is a diagram illustrating a brake hydraulic adjustment device including a coupler according to Embodiment 2. Fig. 5B is a diagram illustrating the brake hydraulic adjustment device including the coupler in a separated state.

### EMBODIMENTS FOR CARRYING OUT THE INVENTION

Embodiment 1 and Embodiment 2 will be described with reference to the attached drawings.

### <Embodiment 1>

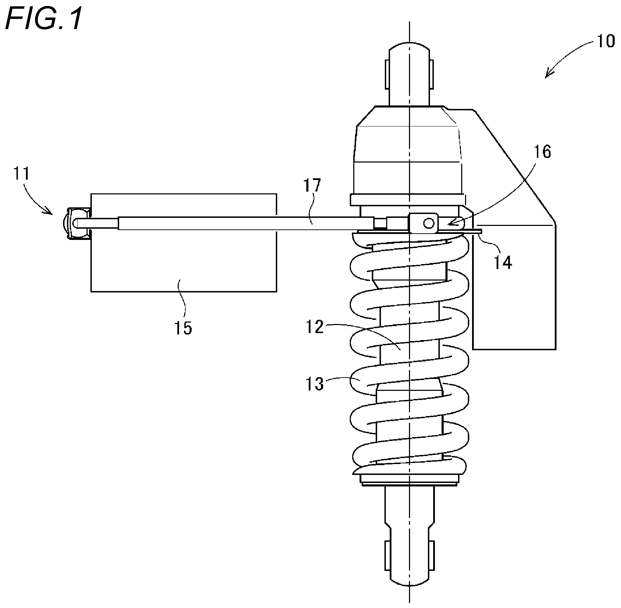

Fig. 1 illustrates a hydraulic shock absorber 10 including a coupler 11 according to Embodiment 1. The hydraulic shock absorber 10 is mounted on, for example, a motorcycle, and includes a shock absorber 12 that absorbs an impact, a compression coil spring 13 (elastic member) that applies a force to the shock absorber 12 in a direction of extending a length of the shock absorber 12 whose entire length is compressed by the impact, a spring bearing 14 that supports an end portion of the compression coil spring 13 on a vehicle body side, an adjustment mechanism 16 that can adjust a position of the spring bearing 14 by a hydraulic pressure of hydraulic oil, and an electric pump 15 that serves as a hydraulic source of the hydraulic oil. The electric pump 15 and the adjustment mechanism 16 are connected to each other via a pipe 17 and the coupler 11.

### (Coupler)

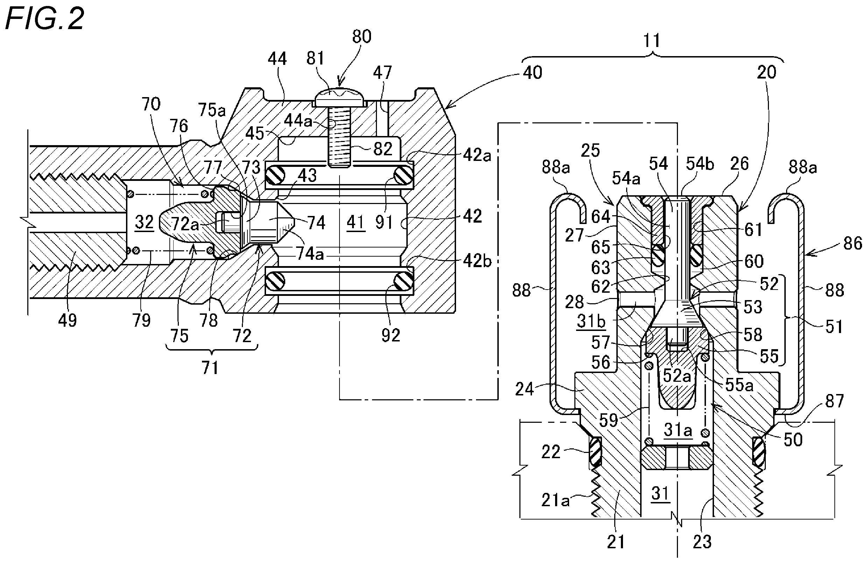

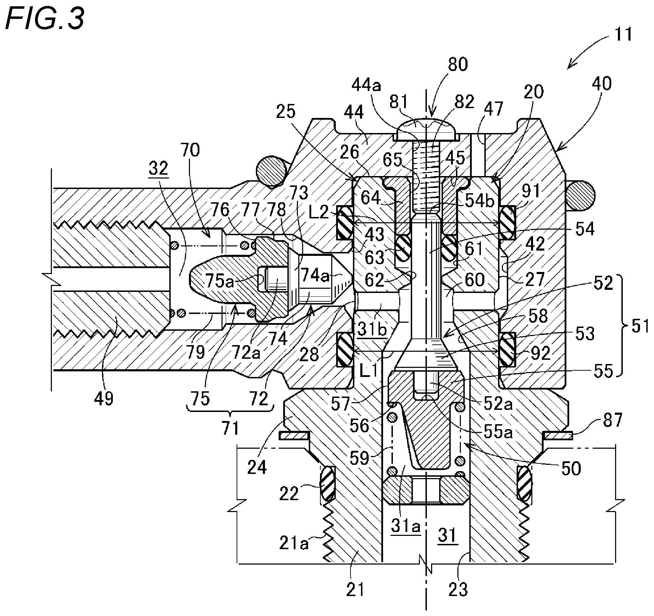

Reference is made to Fig. 2. The coupler 11 includes a first member 20 (plug) on the electric pump 15 side with reference to a direction in which the hydraulic oil flows, and a second member 40 (socket) provided on the pipe 17 side and connectable to the first member 20. Fig. 2 illustrates the coupler 11 in a separated state in which the first member 20 and the second member 40 are separated from each other. Fig. 3 illustrates the coupler 11 in a connection state in which the first member 20 and the second member 40 are connected to each other.

### (First Member)

Reference is made to Fig. 2. The first member 20 includes a connection portion 21 connectable to a member on the electric pump 15 side, a large-diameter portion 24 having an outer diameter larger than the connection portion 21, and a substantially columnar insertion portion 25 having an outer diameter smaller than the large-diameter portion 24. A male screw 21a that can be fastened to a member on the electric pump 15 side is formed on an outer peripheral surface of the connection portion 21. Further, the connection portion 21 is provided with a seal member 22 that closes a gap with the member on the electric pump 15 side.

### (Second Member)

The second member 40 (socket) includes an inserted portion 41 into which the insertion portion 25 can be inserted. Hereinafter, a direction in which the insertion portion 25 is inserted into the inserted portion 41 is referred to as a back side, and a direction in which the insertion portion 25 is pulled out from the inserted portion 41 is referred to as a front side.

### (First Oil Passage)

A first oil passage 31 through which the hydraulic oil flows is formed inside the first member 20. An opening 23 is formed in the connection portion 21. An outer peripheral surface opening 28 is formed in an outer peripheral surface 27 of the insertion portion 25.

The first oil passage 31 is formed from the opening 23 on the electric pump 15 side to the outer peripheral surface opening 28. The first oil passage 31 includes, for example, a radial direction oil passage 31b having the outer peripheral surface opening 28 and extending in a radial direction of the insertion portion 25, and an insertion direction oil passage 31a extending in an insertion direction and having the opening 23. The radial direction oil passage 31b is a hole penetrating the insertion portion 25 in the radial direction. A center of the radial direction oil passage 31b and the end portion, on the back side, of the insertion direction oil passage 31a are continuous.

### (First Valve Mechanism)

The first oil passage 31 is provided with a first valve mechanism 50 including a first valve body 51 capable of opening and closing the first oil passage 31 by moving along the insertion direction. The first valve mechanism 50 opens the first oil passage 31 when the insertion portion 25 is inserted into the inserted portion 41 (see Fig. 3), and closes the first oil passage 31 when the insertion portion 25 is pulled out from the inserted portion 41 (see Fig. 2).

Specifically, the first valve mechanism 50 includes the first valve body 51, a first valve seat 58 which is formed on a wall surface of the insertion direction oil passage 31a of the first oil passage 31 and on which the first valve body 51 can be seated, and a first compression coil spring 59 (first elastic member) capable of applying a force to the first valve body 51 in a direction in which the first valve body 51 comes into close contact with the first valve seat 58.

### (First Valve Seat)

An inner diameter of the first valve seat 58 decreases toward the back side.

### (First Valve Body)

The first valve body 51 includes a first hard member 52 and a first soft member 55 having different hardness. A protrusion portion 52a formed on the first hard member 52 is fitted into a recessed portion 55a formed on the first soft member 55. The first hard member 52 is positioned on the back side, and the first soft member 55 is positioned on the front side.

### (First Soft Member)

The first soft member 55 includes a first spring bearing portion 56 that receives the first compression coil spring 59, and a first seating portion 57 that can be seated on the first valve seat 58. The softness of the first soft member 55 may be any softness as long as the first soft member 55 is deformable when seated on the first valve seat 58. A material of the first soft member 55 is, for example, urethane resin.

### (First Hard Member)

The first hard member 52 includes a first tapered portion 53 whose outer diameter decreases toward the back side, and a first column portion 54 extending further toward the back side from an end portion, on the back side, of the first tapered portion 53. The first column portion 54 has a constant outer diameter and serves as a guide for movement of the first valve body 51.

### (Column Portion Housing Portion)

The first member 20 includes a column portion housing portion 60 that houses substantially half the back side of the first column portion 54 of the coupler 11. The column portion housing portion 60 is a columnar space that is positioned on the back side relative to the radial direction oil passage 31b and has both ends on the back side and the front side open. An inner peripheral surface 61 of the column portion housing portion 60 includes a reduced diameter portion 62 having a small inner diameter. An outer peripheral surface 54a of the first column portion 54 is slidable with respect to the reduced diameter portion 62.

### (Column Portion Seal Member)

The column portion housing portion 60 is provided with an annular column portion seal member 63 that fills a gap between the inner peripheral surface 61 of the column portion housing portion 60 and the outer peripheral surface 54a of the first column portion 54 on the back side relative to the reduced diameter portion 62.

### (Holding Member)

The column portion housing portion 60 is provided with a cylindrical holding member 64 capable of holding the first column portion 54 on the back side relative to the column portion seal member 63. The outer peripheral surface 54a of the first column portion 54 is slidable with respect to an inner peripheral surface 65 of the holding member 64. An outer diameter of the end portion, on the back side, of the holding member 64 is set to be large.

### (Second Oil Passage)

The second member 40 is formed with a second oil passage 32 that is connected to the first oil passage 31 and through which the hydraulic oil can flow. The second oil passage 32 extends in the radial direction of the inserted portion 41. The second oil passage 32 has an inner peripheral surface opening 43 formed in an inner peripheral surface 42 of the inserted portion 41. The inserted portion 41 includes a lid portion 44 having a facing surface 45 that can face a tip end surface 26 of the insertion portion 25.

### (Second Valve Mechanism)

The second member 40 includes a second valve mechanism 70 including a second valve body 71 capable of opening and closing the second oil passage 32 by moving along the radial direction of the inserted portion 41. The second valve mechanism 70 opens the second oil passage 32 when the insertion portion 25 is inserted into the inserted portion 41 (see Fig. 2), and closes the second oil passage 32 when the insertion portion 25 is pulled out from the inserted portion 41 (see Fig. 3).

Specifically, the second valve mechanism 70 includes the second valve body 71, a second valve seat 78 which is formed on a wall surface of the second oil passage 32 and on which the second valve body 71 can be seated, and a second compression coil spring 79 (second elastic member) capable of applying a force to the second valve body 71 in a direction in which the second valve body 71 comes into close contact with the second valve seat 78.

The second member 40 is provided with a support member 49 capable of supporting the second compression coil spring 79. A hole capable of communicating with the second oil passage 32 is formed at a center of the support member 49.

### (Second Valve Seat)

An inner diameter of the second valve seat 78 decreases toward the inner side of the inserted portion 41 in the radial direction.

### (Second Valve Body)

The second valve body 71 includes a second hard member 72 and a second soft member 75 having different hardness. A protrusion portion 72a formed on the second hard member 72 is fitted into a recessed portion 75a formed on the second soft member 75. The second hard member 72 is positioned on the inner side of the inserted portion 41 in the radial direction, and the second soft member 75 is positioned on the outer side of the inserted portion 41 in the radial direction.

### (Second Soft Member)

The second soft member 75 includes a second spring bearing portion 76 that receives the second compression coil spring 79, and a second seating portion 77 that can be seated on the second valve seat 78. A material of the second soft member 75 is the same as that of the first soft member 55.

### (Second Hard Member)

The second hard member 72 includes a second tapered portion 73 having an outer diameter decreasing toward the inner side of the inserted portion 41 in the radial direction, and a second column portion 74 extending radially inward from the end portion of the inner side of the second tapered portion 73 in the radial direction.

When the coupler 11 is in the separated state (see Fig. 2), the second column portion 74 includes a protruding portion 74a protruding radially inward from the inner peripheral surface 42 of the inserted portion 41. When the insertion portion 25 is inserted into the inserted portion 41, the protruding portion 74a can come into contact with the outer peripheral surface 27 of the insertion portion 25. A diameter of the protruding portion 74a decreases toward a tip end of the protruding portion 74a. In the connection state (see Fig. 3), the tip end of the protruding portion 74a is positioned on the back side relative to the outer peripheral surface opening 28.

### (Pushing Member)

The first member 20 includes a pushing member 80 that comes into contact with a tip end surface 54b of the first column portion 54 of the first valve body 51 and pushes the first valve body 51 in a direction away from the first valve seat 58, when the insertion portion 25 is inserted into the inserted portion 41 (the state illustrated in Figs. 2 and 3).

The pushing member 80 is movable along the insertion direction. The pushing member 80 is, for example, a screw, and includes a shaft portion 82 penetrating the lid portion 44 of the inserted portion 41, and a head portion 81 provided at an end portion, on the back side, of the shaft portion 82 and operable from the outside. A male screw is formed on an outer peripheral surface of the shaft portion 82. A female screw 44a that can mesh with the male screw of the shaft portion 82 is formed in the lid portion 44. A diameter of the shaft portion 82 is the same as the diameter of the first column portion 54 of the first valve body 51.

The pushing member 80 is separate from the second member 40, but may be integrally formed of the same material as the second member 40.

### (Movement Range of Pushing Member)

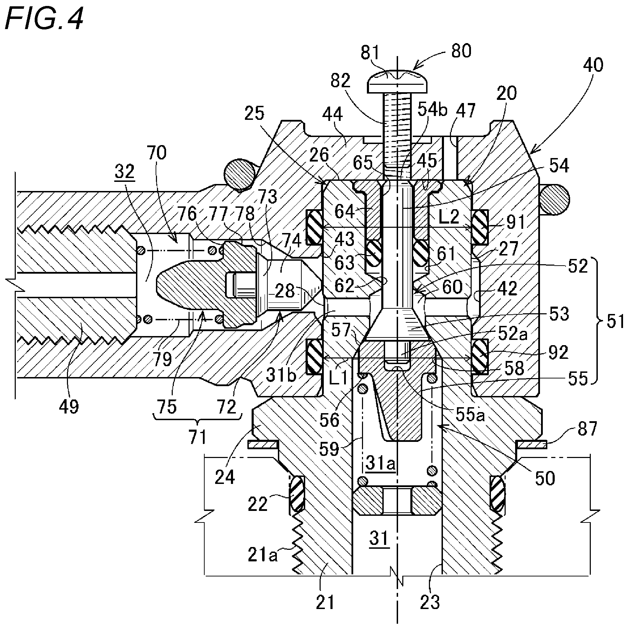

Reference is made to Fig. 3. In a state in which the insertion portion 25 is inserted into the inserted portion 41, the pushing member 80 can be moved to the back side or the front side by rotating the head portion 81. Reference is made to Fig. 4. A movement range of the pushing member 80 includes a state (state illustrated in Fig. 4) in which the shaft portion 82 of the pushing member 80 is separated from the tip end surface 54b of the first valve body 51 and the first valve body 51 is seated on the first valve seat 58.

### (Back Side Seal Member)

Reference is made to Figs. 2 and 3. An annular back side seal member 91 is provided on the back side relative to the outer peripheral surface opening 28 of the first oil passage 31 and the inner peripheral surface opening 43 of the second oil passage 32. The back side seal member 91 closes a gap between the outer peripheral surface 27 of the insertion portion 25 and the inner peripheral surface 42 of the inserted portion 41. In the separated state, the back side seal member 91 is attached to a back groove 42a formed on the back side relative to the inner peripheral surface opening 43 on the inner peripheral surface 42 of the inserted portion 41.

### (Front Side Seal Member)

An annular front side seal member 92 is provided on the front side relative to the outer peripheral surface opening 28 of the first oil passage 31 and the inner peripheral surface opening 43 of the second oil passage 32. The front side seal member 92 closes a gap between the outer peripheral surface 27 of the insertion portion 25 and the inner peripheral surface 42 of the inserted portion 41. The front side seal member 92 is attached to a front groove 42b formed on the front side relative to the inner peripheral surface opening 43 on the inner peripheral surface 42 of the inserted portion 41. In the separated state, the back side seal member 91 and the front side seal member 92 may be attached to the outer peripheral surface 27 of the insertion portion 25.

### (Seal Diameter of Seal Member)

Reference is made to Fig. 3. When the coupler 11 is in the connection state, a seal diameter L1 of the front side seal member 92 is set to be equal to a seal diameter L2 of the back side seal member 91 (L1 = L2). Here, the seal diameter L1 is an inner diameter of the front side seal member 92 in a state in which the front side seal member 92 is disposed, in other words, a diameter of a portion of the outer peripheral surface 27 of the insertion portion 25 with which the front side seal member 92 comes into contact. The seal diameter L2 is an inner diameter of the back side seal member 91 in a state in which the back side seal member 91 is disposed, in other words, a diameter of a portion of the outer peripheral surface 27 of the insertion portion 25 with which the back side seal member 91 comes into contact.

### (Vent Hole)

The second member 40 has a vent hole 47 that communicates the inserted portion 41 of the second member 40 with the outside and through which the atmosphere is passable. The vent hole 47 is, for example, a hole penetrating the lid portion 44.

### (Effects of Embodiment)

Reference is made to Fig. 2. Firstly, the coupler 11 includes: the first member 20 including the insertion portion 25 in which the first oil passage 31 is formed, the opening 28 of the first oil passage 31 being formed in the outer peripheral surface 27 of the insertion portion 25; the first valve mechanism 50 including the first valve body 51 capable of opening and closing the first oil passage 31; and the second member 40 including the inserted portion 41 into which the insertion portion 25 can be inserted, the opening 43 of the second oil passage 32 capable of communicating with the first oil passage 31 being formed in the inner peripheral surface 42 of the inserted portion 41.

Further, the coupler 11 includes: the back side seal member 91 which is provided on the back side in the insertion direction relative to the opening 28 of the first oil passage 31 and the opening 43 of the second oil passage 32 and closes the gap between the outer peripheral surface 27 of the insertion portion 25 and the inner peripheral surface 42 of the inserted portion 41; and the front side seal member 92 which is provided on the front side in the insertion direction relative to the opening 28 of the first oil passage 31 and the opening 43 of the second oil passage 32 and closes the gap between the outer peripheral surface 27 of the insertion portion 25 and the inner peripheral surface 42 of the inserted portion 41.

Reference is made to Fig. 3. In the connection state in which the insertion portion 25 is inserted into the inserted portion 41 and the first member 20 and the second member 40 are connected to each other, the seal diameter L1 of the front side seal member 92 is set to be equal to the seal diameter L2 of the back side seal member 91.

When the coupler 11 is connected, the first oil passage 31 and the second oil passage 32 are filled with the hydraulic oil, and the hydraulic pressure is increased by the electric pump 15, a force toward the back side acts on the back side seal member 91. A force toward the front side acts on the front side seal member 92. The force pushing the back side seal member 91 toward the back side and the force pushing the front side seal member 92 toward the front side cancel each other. Therefore, it is possible to provide the coupler 11 capable of reducing the force acting in the direction of releasing the connection between the first member 20 and the second member 40 due to the internal pressure of the hydraulic oil. In other words, the internal pressure of the hydraulic oil can be set higher. The strength of the coupler 11 can be increased. The force required to attach and detach the coupler 11 can be reduced.

Reference is made to Figs. 2 and 3. Secondly, in the coupler 11 in the first aspect, the second member 40 includes the second valve mechanism 70 including the second valve body 71 capable of opening and closing the second oil passage 32. The second valve mechanism 70 opens the second oil passage 32 when the insertion portion 25 is inserted into the inserted portion 41, and closes the second oil passage 32 when the insertion portion 25 is pulled out from the inserted portion 41. That is, the valve mechanism is provided not only in the first oil passage 31 but also in the second oil passage 32.

Thirdly, in the coupler 11 in the second aspect, the second valve mechanism 70 includes the second valve seat 78, the second valve seat 78 formed on the wall surface of the second oil passage 32, the second valve body 71 capable of being seated on the second valve seat 78, and the second compression coil spring 79 capable of applying a force to the second valve body 71 such that the second valve body 71 comes into close contact with the second valve seat 78. Further, in a state in which the insertion portion 25 is pulled out from the inserted portion 41, the tip end of the second valve body 71 protrudes radially inward from the inner peripheral surface 42 of the inserted portion 41, and the second valve body 71 is seated on the second valve seat 78. In a state in which the insertion portion 25 is inserted into the inserted portion 41, the tip end of the second valve body 71 is in contact with the outer peripheral surface 27 of the insertion portion 25, and the second valve body 71 is separated from the second valve seat 78.

Reference is made to Fig. 3. Fourthly, in the coupler 11 in the first aspect, the second member 40 includes the pushing member 80 that comes into contact with the first valve body 51 and pushes the first valve body 51 in a direction away from the first valve seat 58 when the insertion portion 25 is inserted into the inserted portion 41. That is, when the insertion portion 25 is inserted into the inserted portion 41, the first oil passage 31 can be opened by the pushing member 80.

Fifthly, in the coupler 11 in the fourth aspect, the pushing member 80 is movable with respect to the second member 40. Since the position of the first valve body 51 also changes according to the position of the pushing member 80, a flow path area of the first oil passage 31 can be adjusted.

Reference is made to Fig. 4. Sixthly, in the coupler 11 in the fifth aspect, the movement range of the pushing member 80 includes a state in which the pushing member 80 is separated from the first valve body 51 and the first valve body 51 is seated on the first valve seat 58 in the state in which the insertion portion 25 is inserted into the inserted portion 41. Since the first oil passage 31 can be closed in advance when the connection of the coupler 11 is released, the hydraulic oil can be prevented from scattering when the connection is released.

Reference is made to Fig. 3. Seventhly, the coupler 11 in the first aspect includes the column portion housing portion 60 formed in the first member 20 and housing a part, on the back side, of the first valve body 51, and the column portion seal member 63 closing the gap between the inner peripheral surface 61 of the column portion housing portion 60 and the outer peripheral surface 54a of the first valve body 51.

The hydraulic oil flows into the column portion housing portion 60 in which a part of the first valve body 51 is housed. However, the column portion housing portion 60 is provided with the column portion seal member 63. The column portion seal member 63 can receive the hydraulic pressure of the hydraulic oil flowing into the column portion housing portion 60. The hydraulic oil can be prevented from reaching the second member 40 via the column portion housing portion 60, and the force acting in the direction in which the first member 20 and the second member 40 are separated from each other can be limited by the hydraulic pressure of the hydraulic oil.

Reference is made to Fig. 2. Eighthly, in the coupler 11 in the first aspect, the second member 40 has the vent hole 47 that communicates the inserted portion 41 of the second member 40 with the outside and through which the air is passable. When the insertion portion 25 is inserted into the inserted portion 41, the air in the inserted portion 41 can be released to the outside.

Ninthly, in the coupler 11 in the first aspect, the first valve body 51 includes the first hard member 52 and the first soft member 55 having different hardness. The first soft member 55 includes the first seating portion 57 that can be seated on the first valve seat 58 formed in the first oil passage 31. By employing a soft material for the portion of the first valve body 51 that is seated on the first valve seat 58, the first oil passage 31 can be more reliably closed.

Tenthly, in the coupler 11 in the second aspect, the second valve body 71 includes the second hard member 72 and the second soft member 75 having different hardness. The second soft member 75 includes the first seating portion 57 that can be seated on the second valve seat 78. By employing a soft material for the portion of the second valve body 71 that is seated on the second valve seat 78, the second oil passage 32 can be more reliably closed.

Reference is made to Fig. 3. Eleventhly, in the coupler 11 in the first aspect, the seal diameter L1 of the front side seal member 92 is set to be smaller than the seal diameter L2 of the back side seal member 91. The seal diameter L1 is not limited to the case of being equal to the seal diameter L2 (L1 = L2), and the seal diameter L1 may be set to be smaller than the seal diameter L2 (L1 < L2) within a range in which a sealing function is not impaired.

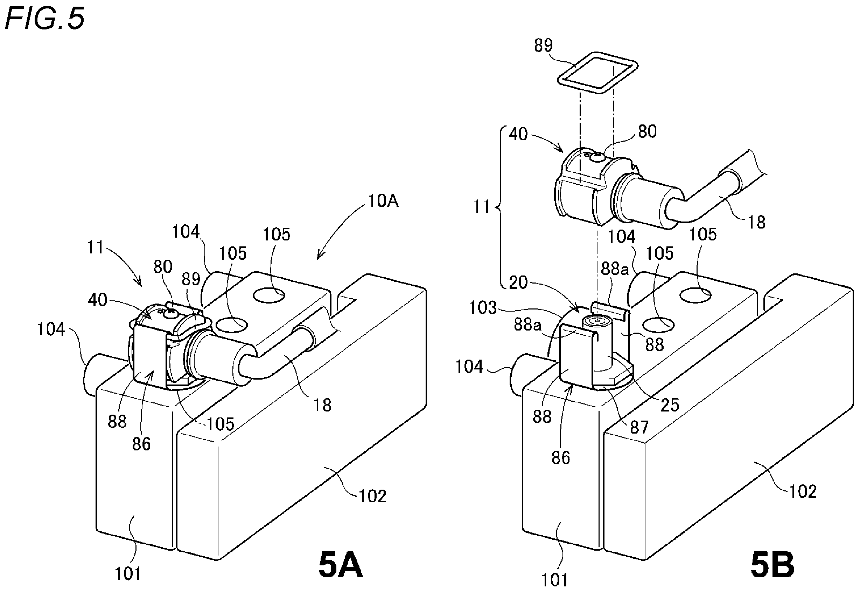

Twelfthly, the coupler 11 in the first aspect is a hydraulic equipment 10 (see Fig. 1) or 10A (see Fig. 5) including the coupler 11 in the first aspect.

Thirteenthly, in the coupler 11 in the twelfth aspect, the hydraulic equipment 10 is specifically the hydraulic shock absorber 10.

Reference is made to Fig. 1. Fourteenthly, in the coupler 11 in the thirteenth aspect, the hydraulic shock absorber 10 includes the compression coil spring 13 (elastic member) that applies a force in a direction of extending a length of the hydraulic shock absorber 10 compressed by an impact, and the adjustment mechanism 16 capable of adjusting the position of the end portion of the compression coil spring 13 by the hydraulic pressure of the hydraulic oil. The adjustment mechanism 16 and the electric pump 15, which is the hydraulic source of the hydraulic oil, are connected to each other via the coupler 11.

### <Embodiment 2>

Figs. 5A and 5B illustrate the hydraulic equipment 10A including the coupler 11 according to Embodiment 2. The hydraulic equipment 10A is a brake hydraulic adjustment device 10A capable of adjusting a hydraulic pressure of hydraulic oil to a brake caliper (not illustrated).

Specifically, the brake hydraulic adjustment device 10A includes a block-shaped modulator body 101, a control device 102 disposed on one side of the modulator body 101 and housing control components, an electric motor 103 disposed on the other side of the modulator body 101, an input side connection port 104 and 104 for the hydraulic oil, and a plurality of output side connection ports 105 for the hydraulic oil. The connection portion 21 (see Fig. 2) of the first member 20 is screwed into and connected to one of the plurality of output side connection ports 105. The second member 40 is fixed to the end portion of the pipe 18.

### (Fixing Member)

When the coupler 11 is in the connection state, the first member 20 and the second member are fixed to each other by a fixing member 86. The fixing member 86 includes a bottom portion 87 sandwiched between the diameter-enlarged portion 24 (see Fig. 2) of the first member 20 and the modulator 101, and a pair of arm portions 88 and 88 (see Fig. 2) extending from both ends of the bottom portion 87 to the second member side.

Each arm portion 88 has a plate shape and is bent when the first member 20 and the second member 40 are connected to each other. Each arm portion 88 has a bent portion 88a (see Fig. 2) bent at the tip end thereof. Each bent portion 88a can be locked to a frame-shaped frame member 89 that can be fixed to the second member 40.

Fifteenthly, in the coupler 11 in the twelfth aspect, as described above, the hydraulic equipment is the brake hydraulic adjustment device 10A capable of adjusting the hydraulic pressure of the hydraulic oil to the brake caliper.

The present invention is not limited to the Embodiment 1 and Embodiment 2 as long as the functions and effects of the present invention are exhibited.

The first valve body 51 includes the first hard member 52 and the first soft member 55 having different hardness, but may be integrally formed of the material of one of the first soft member 55 and the first hard member 52 according to the necessity of strength. For example, the first valve body 51 may be formed of the material of the first soft member 55 when the strength is not as necessary as that of the first hard member 52.

### REFERENCE SIGNS LIST

10: hydraulic shock absorber (hydraulic equipment)
10A: brake hydraulic adjustment device (hydraulic equipment)
11: coupler
12: shock absorber
13: compression coil spring
15: electric pump (hydraulic source)
16: adjustment mechanism
20: first member
25: insertion portion
27: outer peripheral surface of insertion portion
28: outer peripheral surface opening (opening of first oil passage)
31: first oil passage
32: second oil passage
40: second member
41: inserted portion
42: inner peripheral surface of inserted portion
43: inner peripheral surface opening (opening of second oil passage)
47: vent hole
50: first valve mechanism
51: first valve body
52: first hard member
58: first valve seat
59: first elastic member
60: column portion housing portion (housing portion)
61: inner peripheral surface of column portion housing portion
63: column portion seal member (seal member of housing portion)
70: second valve mechanism
71: second valve body
72: second hard member
75: second soft member
78: second valve seat
79: second compression coil spring (second elastic member)
80: pushing member
91: back side seal member
92: front side seal member
L1: seal diameter of front side seal member
L2: seal diameter of back side seal member

## Claims

1. A coupler comprising:
a first member including an insertion portion in which a first oil passage is formed, an opening of the first oil passage being formed in an outer peripheral surface of the insertion portion;
a first valve mechanism including a first valve body capable of opening and closing the first oil passage;
a second member including an inserted portion into which the insertion portion is insertable, an opening of a second oil passage capable of communicating with the first oil passage being formed in an inner peripheral surface of the inserted portion;
a back side seal member provided on a back side in an insertion direction relative to the opening of the first oil passage and the opening of the second oil passage and closing a gap between the outer peripheral surface of the insertion portion and the inner peripheral surface of the inserted portion; and
a front side seal member provided on a front side in the insertion direction relative to the opening of the first oil passage and the opening of the second oil passage and closing a gap between the outer peripheral surface of the insertion portion and the inner peripheral surface of the inserted portion, wherein
in a connection state in which the insertion portion is inserted into the inserted portion and the first member and the second member are connected to each other,
a seal diameter of the front side seal member is set to be equal to or smaller than a seal diameter of the back side seal member.

2. The coupler according to claim 1, wherein
the second member includes a second valve mechanism including a second valve body capable of opening and closing the second oil passage, and
the second valve mechanism opens the second oil passage when the insertion portion is inserted into the inserted portion, and closes the second oil passage when the insertion portion is pulled out from the inserted portion.

3. The coupler according to claim 2, wherein
the second valve mechanism includes the second valve body, a second valve seat formed on a wall surface of the second oil passage and on which the second valve body is capable of being seated, and a second elastic member capable of applying a force to the second valve body such that the second valve body comes into close contact with the second valve seat,
in a state in which the insertion portion is pulled out from the inserted portion, a tip end of the second valve body protrudes radially inward from the inner peripheral surface of the inserted portion, and the second valve body is seated on the second valve seat, and
in a state in which the insertion portion is inserted into the inserted portion, the tip end of the second valve body comes into contact with the outer peripheral surface of the insertion portion, and the second valve body is separated from the second valve seat.

4. The coupler according to claim 3, wherein
the second member includes a pushing member that comes into contact with the first valve body and pushes the first valve body in a direction away from a first valve seat formed in the first oil passage when the insertion portion is inserted into the inserted portion.

5. The coupler according to claim 4, wherein
the pushing member is movable with respect to the second member.

6. The coupler according to claim 5, wherein
a movement range of the pushing member includes a state in which the pushing member is separated from the first valve body and the first valve body is seated on the first valve seat formed in the first oil passage in a state in which the insertion portion is inserted into the inserted portion.

7. The coupler according to claim 1, further comprising:
a housing portion formed in the first member and housing a part, on the back side, of the first valve body; and
a seal member closing a gap between an inner peripheral surface of the housing portion and an outer peripheral surface of the first valve body.

8. The coupler according to claim 1, wherein
the second member has a vent hole that communicates the inserted portion of the second member with outside and through which air is passable.

9. The coupler according to claim 1, wherein
the first valve body includes a first hard member and a first soft member having different hardness, and
the first soft member includes a first seating portion capable of being seated on a first valve seat formed in the first oil passage.

10. The coupler according to claim 3, wherein
the second valve body includes a second hard member and a second soft member having different hardness, and
the second soft member includes a second seating portion capable of being seated on the second valve seat.

11. The coupler according to claim 1, wherein
a seal diameter of the front side seal member is set to be smaller than a seal diameter of the back side seal member.

12. A hydraulic equipment comprising the coupler according to claim 1.

13. The coupler according to claim 12, wherein
the hydraulic equipment is a shock absorber.

14. the shock absorber includes an elastic member that applies a force in a direction of extending a length of the shock absorber compressed by an impact, and an adjustment mechanism capable of adjusting a position of an end portion of the elastic member by a hydraulic pressure of the hydraulic oil, and
the adjustment mechanism and a hydraulic source of the hydraulic pressure of the hydraulic oil are connected to each other via the coupler according to claim 13.

15. The coupler according to claim 12, wherein
the hydraulic equipment is a brake hydraulic adjustment device capable of adjusting a hydraulic pressure of a brake.
